# EUROPEAN PATENT APPLICATION

(11) **EP 2 460 590 A1**
(43) Date of publication of application: **06.06.2012**
(21) Application number: 10804447.0
(22) Date of filing: 28.07.2010
(51) Int. Cl.: B04B 11/00

(54) **CENTRIFUGAL SEPARATOR**

(30) Priority: 28.07.2009 JP 2009174879
(71) Applicant: Hitachi High-Technologies Corporation, Tokyo 105-8717 (JP)
(72) Inventor: FUKUGAKI Tatsuya, Hitachinaka-shi Ibaraki 312-8504 (JP); OGA Hiroshi, Hitachinaka-shi Ibaraki 312-8504 (JP); OBA Shigemi, Hitachinaka-shi Ibaraki 312-8504 (JP); ISOBE Tetsuya, Hitachinaka-shi Ibaraki 312-8504 (JP); ONIZAWA Kuniaki, Hitachinaka-shi Ibaraki 312-8504 (JP)
(74) Representative: Strehl Schübel-Hopf & Partner
(86) International application number: PCT/JP2010/062694
(87) International publication number: WO 2011/013701

(57) **Abstract**

A sample examination automatic system is provided that can limit a weight difference between buckets (17) mounted at respective symmetrical positions with respect to a centrifugal separation rotational center and that can continuously perform examination on samples in the order of the samples carried into the system. This system exercises control as below. When a sample (21) is carried in a centrifugal buffer line (11), its weight is measured by weight measuring means (31) such as a load cell or the like. It is assumed that the names of two adaptors (22) placed at respective symmetrical positions with respect to the centrifugal separation rotational center are defined as an adaptor A and an adaptor B. A first sample is put on the adaptor A and a second sample is put on the adaptor B. Then, a third sample and subsequent ones are each put on the adaptor (22) lighter than the other adaptor after the total weights of samples put on the adaptors are computation-compared with each other.

## Description

### Technical Field

The present invention relates to centrifugal separators for subjecting samples to centrifugal separation. In particular, the invention relates to a centrifugal separator that can avoid unbalanced operation attributable to a difference in weight during centrifugal separation.

### Background Art

Laborsaving for examination work in the medical field has recently proceeded by introducing various types of automatic equipment. For the examination in a hospital, the samples for test of inpatients and outpatients are collected from departments in the hospital and collectively processed in an examination room. Examination items for each sample are sent from doctors to the examination room by use of an online information processing system. Results of the examination are then reported online from the examination room to the doctors.
For many of examination items on blood or urine, pretreatment for examination needs to be performed such as centrifugal separation, unplugging, dispensing, and the like. It takes much time for engagement in such pretreatment work in total examination working hours.

Of the treatments mentioned above, the centrifugal separation aims to subject blood collected from a patient to centrifugal separation to extract serum components as a sample for test. A centrifugal separator for use in automatic sample examination systems generally includes a plurality of bucket groups swingably held by a rotating rotor. The bucket group is composed of a plurality of bucket-pairs. Each bucket-pair is composed of buckets provided at rotational symmetric positions. A plurality of (e.g. about five to ten) samples are inserted into each bucket in an erected manner. Conventionally, samples have manually been inserted into each bucket, while an automatic sample examination system in which pretreatment for examination is automated aims to automate such sample inserting work.

Centrifugation work is performed by rotating a rotor at high speed. The weights of buckets arranged at respective positions symmetrical with respect to rotor rotation may be greatly different from each other. Since, in such a case, malfunction occurs in rotor rotation and so normal centrifugation work cannot be achieved, it is necessary to perform weight adjustment for buckets before the buckets are mounted on the rotor. In Patent Document 1, a weight, which is called a dummy rack, is used as weight adjustment means to reduce a difference in weight between the buckets. On the other hand, JP-7-80355-A discloses a method as follows. The weights of all racks are measured in advance and the racks are temporarily stocked. After that, a rack-pair whose weight difference falls within a given range is selected from the stocked rack groups and the rack-pair selected is inserted into a bucket-pair.

### Prior-Art References

### Patent Documents

Patent document 1: JP-4-145968-A
Patent document 2: JP-7-80355-A

### Summary of the Invention

### Problem to be Solved by the Invention

In the method described in Patent Document 1, the weight of a rack mounted on a bucket is not measured and the dummy rack is used only when the number of racks mounted on a bucket is different from that of racks mounted on another bucket. Therefore, if test tubes are different in size from each other and difference in weight between the racks is great, it is difficult to accurately create a balance between the racks. In addition, the method described in Patent Document 1 needs to provide the space in which members such as dummy racks or the like are arranged, resulting in an increase of device size.

By contrast, the technology described in Patent Document 2 temporarily stocks all the racks that have been loaded into the equipment and determines rack-pairs each of which has a small weight difference, from among the stocked racks. Therefore, in some cases rack-pairs cannot be transferred to corresponding buckets according to the sequence of loading depending on pairing of racks. If weight balance is not eventually achieved, a dummy rack has to be used.

The present invention has been made in view of the conventional problem mentioned above and aims to provide a centrifugal separator that can perform normal centrifugation operation while achieving downsizing of a centrifugal separator and simplifying a rotor.

### Means for Solving the Problem

In order to achieve the above object, the present invention is constituted as below.

A centrifugal separator that includes a sample container for holding a sample; adapters on which a plurality of the sample containers can be mounted; buckets on which the adaptors can be placed; a rotor for rotating the bucket for centrifugal separation; and a sample container mounting mechanism that selectively mounts the sample containers on the adaptor so that respective weights of the adaptors may substantially equal to each other, the adaptors being placed on a pair of respective buckets provided at symmetric positions with respect to the center of the rotor for centrifugation.

The sample container is applicable to a method in which a sample container mounted on a holder for holding only one sample container is transferred as well as to a method in which sample containers mounted on a rack on which a plurality of samples containers can be mounted are transferred. The adaptor may have any shape as long as a plurality of samples containers can be mounted thereon. However, the adaptor is generally a box-like shape, which is bored with such holes as to be fitted to the shape of the sample container so that the sample container may be not vibrated during centrifugal separation. The bucket shape is designed so that the adaptors set on the bucket may not fly apart even if the bucket is rotated at high speed (a plurality of the buckets are typically rotated around the single identical axis) for centrifugal separation. The adaptor weight may be obtained by previously measuring the weight of the individual sample container or the weight of the holder holding the sample container and making a calculation based on the measurement results. Alternatively, the weight of the adaptor per se on which the sample containers are mounted may be measured.

The following configurations are more preferable.

A sample examination automatic system includes a series of processing portions having a centrifuging portion processes a plurality of samples. The centrifuging portion includes a centrifugal transfer line in which a holder supporting a sample is transferred by a transfer line and a plurality of samples are made temporarily standby; a turn table for holding adaptors for supporting the plurality of samples; and a centrifuge. This system is characterized by exercising the following control. The weight of a holder supporting a sample is measured on a one set basis on the centrifugal buffer line. A pair of adaptors to be mounted at symmetrical positions is determined. The total weight of the samples transferred to each of the adaptors is sequentially calculated. The sample is sequentially transferred to an adaptor having the smaller sum of sample weights. With the configuration described above, a difference in weight between the pair of adaptors mounted at symmetrical positions is minimized. This weight difference is less than the weight of a single test tube even at a maximum, i.e., is substantially equal to or less than a permissible unbalanced weight difference. Therefore, a step of inserting/removing a weight to achieve a weight balance becomes unnecessary. For example, when samples are to be transferred to an adaptor A and an adaptor B among adaptor-pairs mounted at symmetrical positions, a first sample is transferred to the adaptor A, a second sample is transferred to the adaptor B, and a third sample is transferred to the adaptor smaller in weight. The same operation is continued until the adaptors have no vacant position. In this way, a weight difference between the adaptors A and B is less than or equal to the single sample weight. Symmetric buckets can constantly be controlled to a level substantially less than or equal to the permissible unbalanced weight difference. Thus, weight adjustment means such as a dummy rack or the like becomes unnecessary.

### Effect of the Invention

As described above, the present invention can control the symmetric buckets during centrifugal separation to a level constantly equal to or less than a permissible unbalanced weight difference. Therefore, weight adjustment means such as a dummy rack or the like becomes unnecessary.

### Brief Description of the Drawings

[Fig. 1]

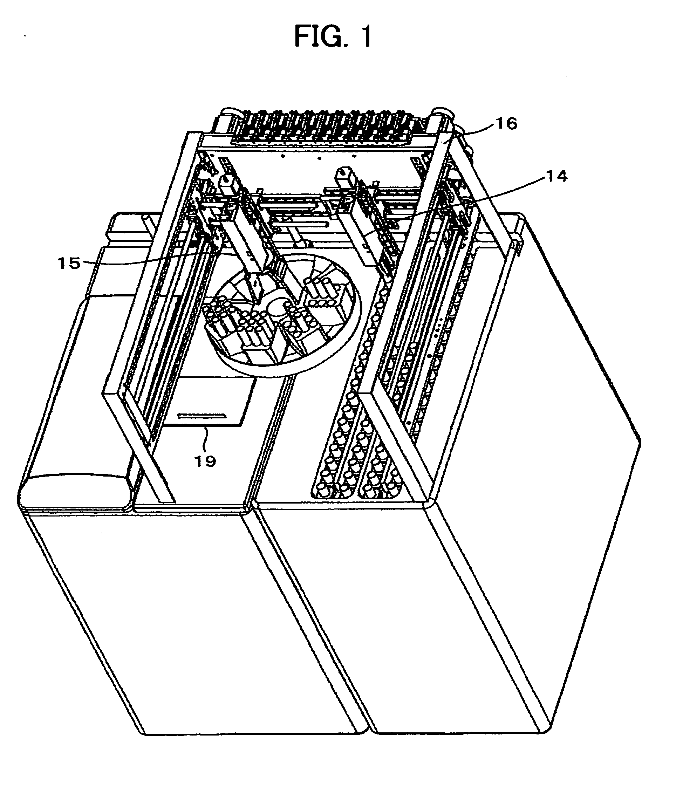

   Fig. 1 is a perspective view of an overall configuration of a centrifuging portion according to the present invention.
[Fig. 2]

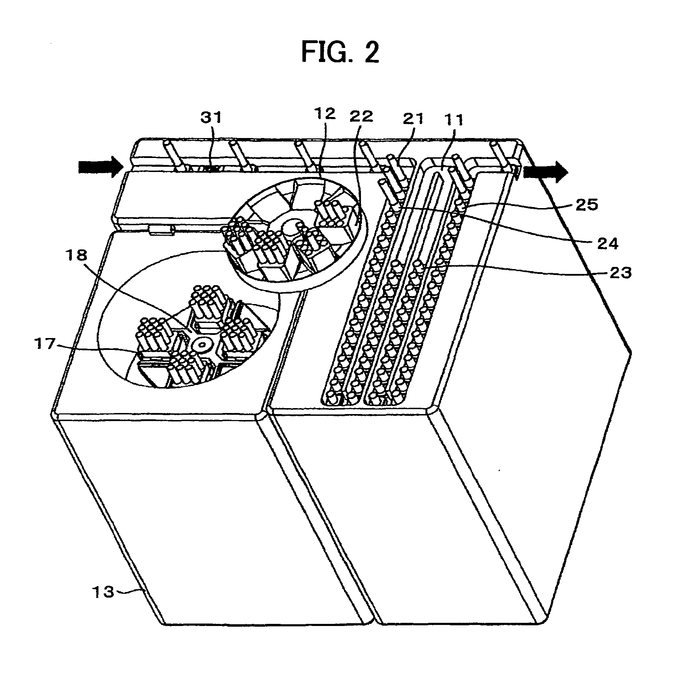

   Fig. 2 is a perspective view illustrating the configuration of the centrifuging portion according to the present invention with its upper portion removed.
[Fig. 3]

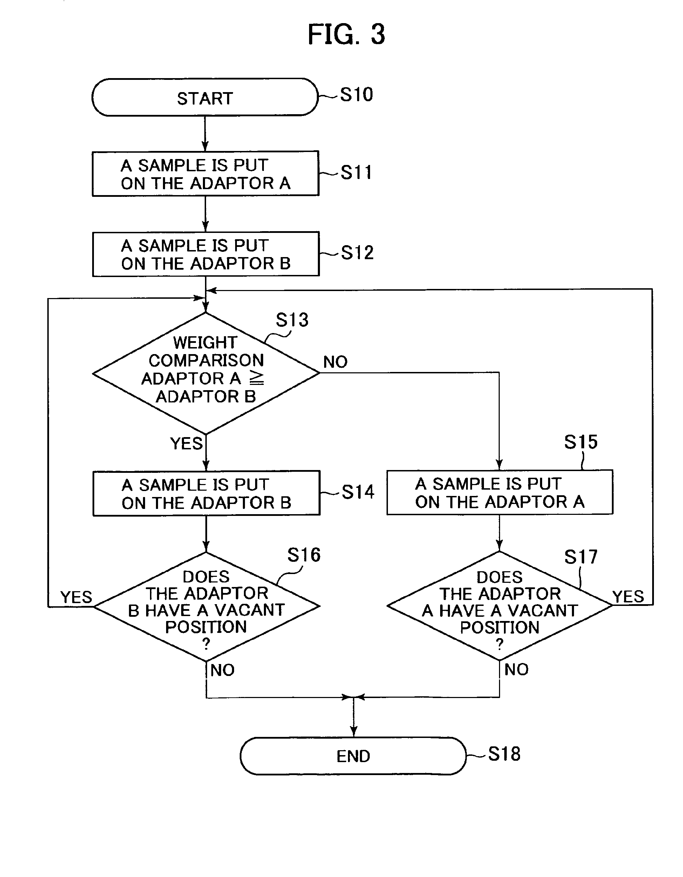

   Fig. 3 is a flowchart for control operation according to the present invention.

### Mode for Carrying Out the Invention

Fig. 1 is a perspective view of an overall configuration of a centrifuging portion according to the present invention. Fig. 2 is a perspective view illustrating the centrifuging portion with its upper portion removed. Fig. 3 is a flowchart for control operation.

The centrifuging portion includes, as main constituent elements, a centrifugal buffer line 11 where a plurality of samples 21 are made temporarily standby; a turn table 12 for holding adaptors 22; and a centrifuge 13 for subjecting samples to centrifugal separation.

Referring to Fig. 2, samples 21 supported by respective holders 23 are sequentially carried into a centrifugal buffer line 11 one by one by a belt line from a previous step unit. The holders 23 are each configured to erectly hold a single sample 21 and are given respective unique ID numbers. A load cell 31 for weight measurement is disposed close to the carrying-in position of the centrifugal buffer line, at which the weight is measured. Weight measurement results are sent to a central control unit on a single sample basis together with the ID number of the holder 23. The holders 23 having been subjected to the weight measurement are sequentially and continuously transferred to the central portion of the centrifugal buffer line. In the present embodiment, a position 24 where a sample is transferred from a holder to an adaptor for centrifugal separation and a position 25 where a sample having been subjected to the centrifugal separation is returned from the adaptor to the holder are fixed in the centrifugal buffer line 11. In the preferred embodiment for preventing processing capacity from lowering, it is desirable that the buffer number of samples equal to the number of the holders filled with samples should be present in the interval between the position 24 where a sample is taken out from a holder and the position 25 where a sample is returned to a holder. The centrifugal buffer line 11 is composed of a single belt line in order to prevent the order of the carried-in samples from being replaced in the middle of the centrifugal buffer line. The holders 23 are configured to erectly hold a plurality of samples 21. At the position where the sample 21 is removed from the holder 23, a sample chuck mechanism 14 transfers a sample to the adaptor 22. It is desirable that the adaptors 22 whose number is twice as that of buckets of the centrifuge should be mountable on the turn table 12. Four buckets are provided in the centrifuge 13 in the present embodiment; therefore, eight adaptors 22, which is twice the number of the buckets, are mounted as is shown in the figure. In this way, the work for transferring samples from the holders 23 to the adaptors 22 and for returning samples from the adaptors 22 to the holders 23 is doable using the waiting time (general centrifugal separation takes five to ten minutes) for the centrifugal separation in the centrifuge 13, leading to the prevention of overall processing throughput lowering. The turn table 12 has a rotary drive motor that controls the turn table 12 to rotate with the adaptors 22 mounted thereon and to stop at arbitrary position. The sample chuck mechanism 14 is secured to an X-Y-Z mechanism 16 shiftable in horizontal and vertical directions and transfers a sample between the holder 23 and the adaptor 22. The X-Y-Z mechanism 16 has an adaptor chuck mechanism 15, which transfers the adaptor 22 into the bucket of the centrifuge similarly to the sample chuck mechanism 14. The centrifuge 13 includes a high-speed rotation drive motor not shown for centrifugal separation; a rotor 18 mounted to the motor; and a plurality of buckets 17 mounted to the rotor 18 symmetrically with respect to its rotating axis. After the work has been completed for transferring the samples to be subjected to the centrifugal separation to the adaptors 22, the adaptor chuck mechanism 15 inserts the adaptor 22 with the samples are mounted, into the bucket 17. After the work for inserting the adaptors 22 into all the buckets 17 has been completed, a safe shutter 19 is closed to start the centrifugal separation. During the centrifugal separation work, the work for removing the samples from the holders 23 and inserting them into the adaptors 22 is continued as preparation for centrifuge for the next cycle. It is desirable to complete the work within the centrifugal time so as not to lower the throughput. To this end, the present embodiment is designed to minimize the distance between the position where the sample is removed from the holder 23 and the position where the sample is inserted into the adaptor 22. After the completion of the centrifugal separation work, the steps reverse to the above-mentioned work are performed. The safe shutter 19 opens first and the adaptor chuck mechanism 15 returns the adaptors 22 from the buckets 17 to the turn table 12. In order to shorten the waiting time for the centrifuge 13, it is desirable to return all the adaptors 22 having been subjected to the centrifugal work to the turn table 12 and continuously insert the adaptors 22 to be subjected to the next centrifugal separation work into the buckets 17. In addition, the turn table 12 is turned in order to minimize the distance for the sample to return from the adaptor 22 to the holder 23. After the turn table 12 has been stopped, the sample chuck mechanism 14 returns the samples from the adaptors 22 to the holders 23. The returning order of the sample to the holders 23 should be the same as the mounting order to the adaptors 22 so as to make the returning order the same as the loading order to the equipment. The samples returned to the holders 23 are transferred to the next step by the belt line.

Fig. 3 is a flowchart for determining as to a sample put on which one of a pair of adaptors located at symmetrical positions for centrifugal separation. In the present embodiment, the names of a pair of adaptors are defined as an adaptor A and an adaptor B. At the time of start (S10), no sample is put on both the adaptors A and B. A single sample is first put on the adaptor A (S11) and another sample is next put on the adaptor B (S12).
Subsequently, weight comparison is subsequently performed on the adaptors A and B on the basis of the weight measurement result of each sample (S13). If the comparison result shows that the adaptor A is heavier than the adaptor B, a next sample is put on the adaptor B (S14). On the other hand, if the adaptor B is heavier than the adaptor A, a next sample is put on the adaptor A (S15). After the samples have been put on the respective adaptors A and B, total weight comparison is again performed on the adaptors A and B (S13). This operation is performed on until the adaptors have no vacant position (S16 and S17). Incidentally, although not illustrated in the flowchart, when the number of the samples loaded into the equipment is small, control proceeds to End (S18) at the point when a time out period input in advance elapses. Thereafter, the adaptors are preferably transferred to the corresponding buckets of the centrifuge. According to the control flowchart, even if the putting of the sample is interrupted in midstream, a weight difference between the adaptors A and B is less than a sample weight. That is to say, such a difference is substantially equal to or smaller than a permissible difference in centrifugal unbalanced weight. Thus, weight adjusting means such as a dummy rack is unnecessary. Samples are alternately put on the adaptors A and B in many cases. It is desirable, therefore, to select adaptors adjacent to each other on the turn table.

An alternative different from the above is a method in which a CCD camera is used to measure the volume of each sample and the measurement result is used to obtain the sample weight.

Incidentally, the above embodiment describes the mechanism that transfers a sample container by use of the holder for holding a single sample container. However, the present invention can be applied to a system in which samples are transferred by a sample rack (usually capable of holding five sample containers) for holding a plurality of samples containers.

### Description of the Reference Numerals

- 11: Centrifugal buffer line
- 12: Turn table
- 13: Centrifuge
- 14: Sample chuck mechanism
- 15: Adaptor chuck mechanism
- 16: X-Y-Z mechanism
- 17: Bucket
- 18: Rotor
- 19: Safe shutter
- 21: Sample
- 22: Adaptor
- 23: Holder
- 24: Position where a sample is transferred from the holder to the adaptor
- 25: Position where the sample is returned from the adaptor to the holder

## Claims

1. A centrifugal separator comprising:
a sample container (21) for holding a sample;
adaptors (22) on which a plurality of the sample containers (22) can be mounted;
buckets (17) on which the adaptors (22) can be placed;
a rotor (18) for rotating the buckets (17) for centrifugal separation; and
a sample container mounting mechanism that selectively mounts the sample containers (21) on the adaptor (22) so that respective weights of the adaptors (22) may substantially equal to each other, the adaptors being placed on a pair of respective buckets (17) provided at positions symmetric with respect to the center of rotation of the rotor (18) for centrifugation.

2. The centrifugal separator according to claim 1, further comprising:
a holder (23) for holding the sample container (21); and
a sample container weight measuring mechanism that measures the weight of the sample container (21) on a holder basis.

3. The centrifugal separator according to claim 2, further comprising:
a storage mechanism that stores the weight measured by the sample container weight measuring mechanism on a holder basis; and
a selection mechanism that selects a sample container (21) to be mounted on the basis of the weight of the sample container stored in the storage mechanism when the sample container mounting mechanism selectively mounts the sample container (21) on the adaptor (22).

4. The centrifugal separator according to claim 1, further comprising:
an adaptor standby mechanism that holds a plurality of the adaptors (22).

5. The centrifugal separator according to claim 4, wherein the adaptor standby mechanism is a turnable (12) on which the plurality of adaptors (22) are circumferentially put.

6. The centrifugal separator according to claim 5, further comprising:
an adaptor transfer mechanism that transfers a pair of selected adaptors (22) from the turn table (12) to the corresponding buckets (17) so as to place the adaptors (22) on a pair of respective buckets (17) located at positions symmetric with respect to the center of rotation of the rotor (18) for centrifugation so that the respective weights of the adaptors may generally be equal to each other.

7. The centrifugal separator according to claim 6, wherein the number of the adaptors (22) that can be held by the table (12) is greater than that of the buckets (17).

8. The centrifugal separator according to claim 2, further comprising:
a buffer line (11) for making a plurality of the holders (23) standby so that the sample container mounting mechanism can selectively mount the sample container (21) on the adaptor (22).

9. The centrifugal separator according to claim 8, wherein the buffer line (11) has at least three areas as follows:
an area used to hold an sample container (21) to be transferred to the adaptor (22);
an area used to hold only a holder (23) to which the sample container (21) has been transferred; and
an area used to transfer a sample container having been subjected to the centrifugal separation to a holder (23).

10. The centrifugal separator according to claim 1, wherein, if the adaptors (22) placed on a pair of buckets (17) at respective symmetric positions with respect to a centrifugal separation rotational center of the rotor (18) are referred to as adapters A and B,
the sample container mounting mechanism first mounts a sample container (21) on the adaptor A, next mounts a sample container (21) on the adaptor B, and compares the respective weights of the adaptors A and B with each other,
if the adaptor A is heavier than the adaptor B, the sample container mounting mechanism mounts a next sample container (21) on the adaptor B,
if the adaptor B is heavier than the adaptor A, the sample container mounting mechanism mounts a next sample container (21) on the adaptor A, and
the sample container mounting mechanism repeats the comparison between the respective weights of the adaptors A and B until the adaptors have no vacant position.

11. The centrifugal separator according to claim 10, further comprising:
a control mechanism that controls so that, a time out period is previously set, and if the time out period elapses, the adaptor (22) is transferred to the bucket (17) even when the adaptor (22) has a vacant position.
